(19) Europäisches Patentamt
European Patent Office
Office européen des brevets

(11) **EP 3 200 338 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **16201786.7**

(22) Anmeldetag: **01.12.2016**

(51) Internationale Patentklassifikation (IPC):
**G01D 5/242** *(2006.01)* **H02P 6/18** *(2016.01)*

(52) Gemeinsame Patentklassifikation (CPC):
**H02P 6/18; G01D 5/242;** H02P 2203/03; H02P 2203/05

(54) **VORRICHTUNG UND VERFAHREN ZUR ERFASSUNG EINER LAGE EINES ROTIERENDEN ZENTRALELEMENTS EINES ELEKTROMOTORS**

DEVICE AND METHOD FOR DETECTING A POSITION OF A ROTATING CENTRAL ELEMENT OF AN ELECTRIC MOTOR

DISPOSITIF ET PROCÉDÉ D'ENREGISTREMENT D'UNE POSITION D'UN ÉLÉMENT CENTRAL TOURNANT D'UN MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2016 DE 102016201074**

(43) Veröffentlichungstag der Anmeldung:
**02.08.2017 Patentblatt 2017/31**

(73) Patentinhaber: **Baumüller Nürnberg GmbH 90482 Nürnberg (DE)**

(72) Erfinder: **LELKES, András 90491 Nürnberg (DE)**

(74) Vertreter: **FDST Patentanwälte Nordostpark 16 90411 Nürnberg (DE)**

(56) Entgegenhaltungen:
**CN-A- 105 162 372** **DE-A1- 10 337 564**
**DE-A1-102010 003 096** **DE-A1-102010 042 332**
**DE-A1-102014 212 554** **JP-A- 2010 011 543**

**Beschreibung**

Die Erfindung betrifft eine Vorrichtung zur Erfassung einer Lage eines rotierenden Zentralelements eines Elektromotors, insbesondere eines Synchronmotors, mit einem Controller und mit einem Gebersystem zur Generierung eines ersten Sensorsignals, sowie mit einem sensorlosen System zur Generierung eines zweiten Sensorsignals. Sie bezieht sich weiter auf ein entsprechendes Verfahren, insbesondere unter Auswertung der Sensorsignale.

Ein insbesondere bürstenloser Elektromotor als Synchronmaschine oder Servomotor weist einen Stator mit einer Anzahl von beispielsweise sternförmig angeordneten Statorzähnen auf, welche eine elektrische Drehfeldwicklung tragen. Im Falle einer dreiphasigen Drehstrommaschine weist der Stator drei Phasen und damit zumindest drei Phasenwicklungen auf, die jeweils phasenversetzt mit elektrischem Strom beaufschlagt werden, um ein magnetisches Drehfeld zu erzeugen, in dem ein üblicherweise mit Permanentmagneten versehener Rotor als Zentralelement rotiert.

Bei der (Antriebs-)Regelung eines mit einem derartigen Elektromotor versehenen elektromotorischen Antriebssystems spielt die Kenntnis über die relative Position des Rotors zum Stator eine wichtige Rolle. Zur Generierung eines geforderten Drehmoments ist es notwendig, dass das magnetische Drehfeld im Stator synchron mit der Drehung des Rotors erzeugt wird. Für die Erzeugung des Drehfeldes, das bedeutet zur phasenrichtigen Bestromung oder Kommutierung der Phasenwicklungen, wird daher die aktuelle Winkellage des Rotors, beziehungsweise ein definierter Wert für dessen (relative) Lage, benötigt.

Zur Bestimmung der Rotorlage sind beispielsweise optische, kapazitive und magnetische Gebersysteme bekannt. Insbesondere werden Resolver als elektromagnetische Gebersysteme eingesetzt, da jene keine zusätzlichen elektronischen und/oder optischen Bauteile umfassen. Dadurch sind Resolver im Betrieb besonders robust gegenüber äußeren Einflüssen, wie beispielsweise Temperaturschwankungen, mechanischen Vibrationen oder Staubpartikeln. Die generierten Sensorsignale des Resolvers sind hierbei charakterisierend für eine Drehzahl des Antriebssystems beziehungsweise für eine Drehzahl einer Motorwelle des Elektromotors.

Nachteilig bei Resolvern ist deren vergleichsweise begrenzte (Winkel-)Auflösung beziehungsweise (Winkel-)Genauigkeit. Herkömmlicherweise werden zweipolige Resolver eingesetzt. Dies bedeutet, dass der Resolver zwei zueinander gegenüberliegend angeordnete magnetische Pole aufweist, die eine absolute Lageinformation für eine mechanische Umdrehung über 360° liefern. Mit anderen Worten liefert der Resolver innerhalb einer Polteilung ein absolutes Lagesignal. Bei mehrpoligen Resolvern, das bedeutet bei Resolvern mit einer Polpaarzahl größer als eins, muss auf die Lage innerhalb eines Polpaares, den sogenannten elektrischen Winkel, umgerechnet werden.

Bei einer Anwendung des Resolvers bei einem Synchronmotor weist der Resolver üblicherweise die Polpaarzahl eine (1) oder zumindest die gleiche Polpaarzahl wie der Synchronmotor auf. Dies bedeutet, dass beispielsweise ein sechspoliger Resolver in Kombination mit einem sechspoligen Elektromotor eingesetzt wird. Die erhöhte Polpaarzahl des Resolvers überträgt sich hierbei vorteilhaft auf eine höhere Winkelauflösung sowie eine höhere Winkelgenauigkeit bei der Lageerfassung.

Nachteiligerweise ist in diesem Falle die absolute mechanische Lageinformation lediglich in einem kleinen Bereich bestimmbar, beispielsweise bei einem sechspoligen Resolver lediglich in einem Winkelbereich von 120°. Ein weiterer Nachteil ist, dass Elektromotoren unterschiedlicher Polpaarzahlen somit unterschiedliche Resolver benötigen, wodurch eine erhöhte Lagerhaltung, kleinere Einkaufsvolumen und Verwechslungsgefahren bei der Montage auftreten.

Des Weiteren sind geberlose Verfahren zur Lageerfassung des Zentralelements bekannt, bei welchen kein Gebersystem benötigt wird. Bei einem derartigen "sensorlosen" Regelverfahren wird der Elektromotor an sich als ein Gebersystem genutzt. Zu diesem Zwecke werden unter anderen magnetische Asymmetrien des Elektromotors zur Lageerfassung verwendet. Beispielsweise wird während der Stromeinspeisung eine höherfrequente Stromkomponente auf die Drehfeldwicklung beaufschlagt und zum Beispiel die lageabhängige Wirkung der Rotormagneten auf die Motorspulen beziehungsweise die induzierten Spannungen erfasst.

Nachteilig an diesem Verfahren ist die vergleichsweise geringe Winkelgenauigkeit. Die Stromeinspeisung erzeugt weiterhin zusätzliche Verlustleistungen und - in Abhängigkeit der Frequenz der eingespeisten Stromkomponente -akustische Effekte, die von einem Benutzer als störendes Pfeifgeräusch wahrgenommen werden können.

Die DE 10 2010 003 096 A1 offenbart eine Ermittlung einer aktuellen Winkelposition eines drehbaren magnetischen Bauteils in einem elektrischen Antrieb.

In der DE 10 2010 042 332 A1 ist ein Verfahren für einen Notlaufbetriebsmodus eines Elektromotorsystems offenbart. Im Zuge des Verfahrens wird ermittelt ob ein Gebersystem ausgefallen ist. Wenn das Gebersystem ausgefallen ist, werden sensorlose Positions- und Drehzahlsignale zum Betrieb des Elektromotors verwendet.

Aus der DE 103 37 564 A1 ist eine Einrichtung und ein Verfahren zur Rotorpositionsbestimmung einer elektrischen Maschine bekannt. Eine Rotorpositionsmesseinrichtung beaufschlagt mindestens eine Wicklung der Maschine mit zur Rotorpositionserkennung dienenden Messimpulsen, wobei eine Rotorbewegungserkennungseinrichtung einen relativen Drehwinkel des Rotors bestimmt.

In der JP 2010 011543 A ist eine Vorrichtung zur Erfassung der Lage eines Rotors beschrieben, bei welcher ein Ausgangssignal eines magnetischen Gebersystems mit einem geschätzten Positionswert verglichen wird.

Aus der DE 10 2014 212 554 A1 ist ein Verfahren zur Erfassung der Lage eines Rotors einer elektrischen Maschine beschrieben, bei welchen bei einer Drehung des Rotors induzierte Spannungen in Phasenwicklungen der Maschine erfasst werden. Aus den erfassten Spannungen wird ein elektrischer Rotorlagenwinkel berechnet und mit einem Raumzeigerwinkel während des Drehens verglichen.

DE 10 2014 212 554 A1 offenbart die folgenden Merkmale des Anspruchs 1:

Eine Vorrichtung zur Erfassung einer Lage eines rotierenden Zentralelements eines Elektromotors, insbesondere eines Synchronmotors, mit einem Controller und mit einem als Resolver ausgeführten Gebersystem zur Generierung eines ersten Sensorsignals, sowie mit einem sensorlosen System zur Generierung eines zweiten Sensorsignals, wobei das Gebersystem eine vom Elektromotor unterschiedliche Polpaarzahl aufweist, wobei der Controller anhand des ersten Sensorsignals und den Polpaarzahlen des Gebersystems und des Elektromotors eine der Polpaarzahl des Gebersystems entsprechende Anzahl von elektrischen Winkeln als Maß für die elektrische Lage des Zentralelements bestimmt.

In der CN 105162372 A ist ein Verfahren zur Korrektur eines anfänglichen Null-Offsets zwischen einem Elektromotor und einem Gebersystem beschrieben. Der Elektromotor ist hierbei mit einem sensorlosen System zur Generierung eines Sensorsignals anhand einer induzierten Spannung ausgestattet. Aus dem Sensorsignal wird ein Winkel eines Rotors bestimmt. Der Offset wird anhand des bestimmten Winkels und eines erfassten Winkels des Gebersystems mittels einer Formel bestimmt.

Der Erfindung liegt die Aufgabe zugrunde, ein Verfahren zur Verbesserung der Winkelauflösung und der Winkelgenauigkeit eines Gebersystems mit einer erhöhten Polpaarzahl anzugeben. Insbesondere soll die daraus abgeleitete Lageinformation des Zentralelements sowohl für eine Kommutierung als auch für eine Lageregelung geeignet sein. Vorzugsweise soll auch eine Möglichkeit geschaffen werden, mit welcher gleiche Gebersysteme für Elektromotoren mit unterschiedlicher Polpaarzahl verwendbar sind. Des Weiteren soll eine hierzu besonders geeignete Vorrichtung angegeben werden.

Bezüglich der Vorrichtung zur Erfassung einer Lage eines rotierenden Zentralelements eines Elektromotors wird die Aufgabe mit den Merkmalen des Anspruchs 1 und bezüglich eines entsprechenden Verfahrens, insbesondere zur Auswertung von Sensorsignalen einer derartigen Vorrichtung, mit den Merkmalen des Anspruchs 4 erfindungsgemäß gelöst. Vorteilhafte Ausgestaltungen und Weiterbildungen sind Gegenstand der jeweiligen Unteransprüche.

Die erfindungsgemäße Vorrichtung ist zur Erfassung einer Lage eines rotierenden Zentralelements eines Elektromotors, insbesondere eines Synchronmotors, vorgesehen und eingerichtet. Hierzu umfasst die Vorrichtung einen Controller und ein Gebersystem zur Generierung eines ersten Sensorsignals, sowie ein sensorloses System zur Generierung eines zweiten Sensorsignals. Das Gebersystem weist hierbei eine vom Elektromotor unterschiedliche Polpaarzahl auf. Der Controller bestimmt anhand der beiden Sensorsignale die Lage des Zentralelements beziehungsweise ein der Lage entsprechenden Positions- oder Lagewert. Durch die zusätzliche Lageinformation des zweiten Sensorsignals des sensorlosen Systems wird die Winkelgenauigkeit und Winkelauflösung bei der Auswertung des ersten Sensorsignals des Gebersystems verbessert. Mit anderen Worten ist der Controller durch Auswertung der beiden Sensorsignale geeignet, die Lage des Zentralelements zuverlässig und sicher zu bestimmen.

Mit der erfindungsgemäßen Vorrichtung ist es somit möglich, ein einheitliches Gebersystem für unterschiedliche Elektromotoren, insbesondere hinsichtlich unterschiedlicher Polpaarzahlen der Elektromotoren, einzusetzen. Dies überträgt sich vorteilhaft auf eine reduzierte Lagerhaltung sowie reduzierte Einkaufsvolumen bzw. Lagervorhaltungen bei der Herstellung des Elektromotors, und vermeidet weiterhin eine Verwechslungsgefahr bei der Montage des Gebersystems. Dadurch wird die Montage eines derartigen Elektromotors vereinfacht, wodurch die Herstellungskosten vorteilhaft reduziert werden.

Bei dem Elektromotor handelt es sich vorzugsweise um einen permanenterregten Synchronmotor oder um einen Synchron-Reluktanzmotor, insbesondere im Zuge eines Servoantriebs. Die Vorrichtung ist hierbei zweckdienlicherweise im Bereich einer Motorwelle als Zentralelement angeordnet, wobei insbesondere das Gebersystem zumindest teilweise mit der Motorwelle gekoppelt ist. Das Gebersystem ist bevorzugterweise als ein Resolver oder ein im Sinne der Erfindung gleichartiger Lagegeber ausgeführt. Das sensorlose System erzeugt das zweite Sensorsignal in Abhängigkeit eines sensorlosen Verfahrens zur Erfassung der Lage des Zentralelements, beispielsweise mittels der Gegen-EMK (back-emf) im Betrieb des Elektromotors.

Unter der Lage des Zentralelements ist hierbei insbesondere die magnetische Anfangsposition des Zentralelements zu verstehen, wobei die Anfangsposition sowohl als ein mechanischer Winkel einerseits als auch als ein elektrischer Winkel andererseits vom Controller bestimmt wird.

Das Zentralelement ist vorzugsweise wellenfest mit einem Rotor gekoppelt, der drehbar innerhalb eines gehäusefesten Stators des Elektromotors gelagert ist. Die magnetische Anfangsposition bezieht sich in diesem Zusammenhang insbesondere auf die relative (Winkel-)Lage zwischen dem Rotor und dem Stator. Der mechanische Winkel beschreibt hierbei insbesondere die absolute mechanische Lage des Rotors zum Stator, wobei der elektrische Winkel insbesondere den für die Kommutierung des Motorstroms maßgebenden Lagewert beschreibt. Der elektrische Winkel ist proportional zu dem mechanischen Winkel sowie der Polpaarzahl des Elektromotors. Da die Polpaarzahl des Elektromotors ein fester Wert ist, ergibt sich der elektrische Winkel direkt aus der Bestimmung des mechanischen Winkels und umgekehrt. Zur erfolgreichen Lagebestimmung ist es daher ausreichend, entweder den mechanischen Winkel oder den elektrischen Winkel zu bestimmen und den jeweils anderen Winkel hieraus zu berechnen.

In einer vorteilhaften Weiterbildung ist das Gebersystem als ein Resolver ausgeführt, der eine Polpaarzahl aufweist, die einen größeren Wert hat, als die Polpaarzahl des Elektromotors. Die erhöhte Polpaarzahl überträgt sich hierbei vorteilhaft auf die Winkelgenauigkeit und Winkelauflösung des Resolvers, sowie der durch den Controller bestimmten Lage.

In einer bevorzugten Ausbildung ist die Polpaarzahl des Gebersystems eine relative Primzahl zu der Polpaarzahl des Elektromotors. Mit anderen Worten sind die Polpaarzahlen des Gebersystems und des Elektromotors teilerfremd, das bedeutet, dass es keine natürliche Zahl außer 1 gibt, die beide Polpaarzahlen restfrei teilt. Mit anderen Worten weisen die Polpaarzahlen keinen gemeinsamen Primfaktor auf.

Das erste Sensorsignal des Gebersystems entspricht einem Maß für den mechanischen Winkel, das bedeutet, dass aufgrund der Polpaarzahl eine der Anzahl der magnetischen Pole entsprechende Anzahl von mechanischen Winkeln bestimmbar ist. Das Verhältnis von Vollwinkel zur Polpaarzahl des Gebersystems ist ein Wert für die erreichbare Winkelgenauigkeit beziehungsweise die erreichbare Winkelauflösung. Das Verhältnis beschreibt im Wesentlichen einen Kreissektor, nach dessen Überschreiten wieder die gleichen Messwerte von dem Gebersystem gemeldet werden. Mit anderen Worten ist es nicht möglich, lediglich anhand der ersten Sensorsignale eine exakte Angabe der absoluten Lage des Zentralelements anzugeben.

Die mechanischen Winkel sind im Wesentlichen proportional zum ersten Sensorsignal sowie dem Inversen der Polpaarzahl des Gebersystems. Das erste Sensorsignal ist hierbei insbesondere die erfasste Winkelinformation des Resolvers an der Motorwelle des Elektromotors. Da die Polpaarzahlen des Gebersystems und des Elektromotors relativ prim zueinander sind, wird vorteilhafterweise sichergestellt, dass eine Bestimmung der hierzu entsprechenden elektrischen Winkel eindeutig möglich ist. Mit anderen Worten ist eine bijektive Abbildung der mechanischen Winkel auf die daraus abgeleiteten elektrischen Winkel realisiert.

Bei dem erfindungsgemäßen Verfahren wird anhand des ersten Sensorsignals und den Polpaarzahlen des Gebersystems und des Elektromotors eine Anzahl von elektrischen Winkeln als Maß für die elektrische Lage des Zentralelements bestimmt. Die elektrische Lage gibt hierbei insbesondere die Phasenlage eines Stromvektors zur Kommutierung des Elektromotors an. Aufgrund der bijektiven Abbildung der mechanischen Winkel auf die elektrischen Winkel ist somit eine Anzahl der dem Wert der Polpaarzahl des Gebersystems entsprechende Anzahl von elektrischen Winkeln gebildet.

Die elektrischen Winkel werden anschließend mit dem zweiten Sensorsignal verglichen. Das zweite Sensorsignal des sensorlosen Systems ist hierbei insbesondere ein Schätzwert für die Lage des Zentralelements, insbesondere für den elektrischen Winkel. Die elektrischen Winkel, die aus der mechanischen Information des Gebersystems bestimmt wurden, werden mit dem geschätzten elektrischen Winkel des sensorlosen Systems verglichen, wobei anhand des Vergleichs die Lage des Zentralelements definiert bestimmt wird.

In einer alternativen Ausgestaltungsform des erfindungsgemäßen Verfahrens ist es beispielsweise denkbar, dass die Lage des Zentralelements anhand eines gewichteten Durchschnitts der erfassten elektrischen Winkel aus dem ersten und zweiten Sensorsignalen bestimmt wird.

Erfindungsgemäß werden während des Vergleichs betragsmäßige Differenzen zwischen dem zweiten Sensorsignal und jedem der elektrischen Winkel des ersten Sensorsignals bestimmt. Die Lage wird hierbei erfindungsgemäß anhand des elektrischen Winkels bestimmt, bei dem die betragsmäßige Differenz zwischen dem zweiten Sensorsignal und dem elektrischen Winkel den geringsten Wert aufweist.

Mit anderen Worten wird das zweite Sensorsignal des sensorlosen Systems dazu verwendet, eine Auswahl aus der Anzahl von möglichen Lagewerten des Gebersystems zu treffen. Der Schätzwert des sensorlosen Systems weist hierbei typischerweise eine geringere Winkelgenauigkeit auf, als die Werte des ersten Sensorsignals des Gebersystems. Das erste Sensorsignal beschreibt im Wesentlichen das Überschreiten eines Kreissektors während einer Drehung des Zentralelements, wobei aufgrund der mehrpoligen Ausgestaltung der absolute Lagewert unbestimmt ist. Der Schätzwert ist zwar ungenauer, ermöglicht es jedoch anhand der betragsmäßigen Differenzen denjenigen Kreissektor beziehungsweise elektrischen Winkel aus der Vielzahl an möglichen auszuwählen, der die Lage des Zentralelements korrekt beschreibt.

Die betragsmäßige Differenz beschreibt die Subtraktion des jeweiligen elektrischen Winkels des Gebersystems von dem zweiten Sensorsignal, sowie die anschließende Betragsbildung. Durch den Betrag wird somit sichergestellt, dass derjenige elektrische Winkel gewählt wird, dessen Wert am nächsten am sensorlosen Schätzwert ist. Dadurch ist auf einfache Art und Weise eine genaue Bestimmung der absoluten Lage des Zentralelements, auch bei unterschiedlichen Polpaarzahlen des Gebersystems und des Elektromotors, realisiert. Dadurch ist die Lage als Absolutwert für eine ganze mechanische Umdrehung kontinuierlich im Betrieb bestimmbar, ähnlich zu einem zweipoligen Resolver, jedoch mit einer wesentlich verbesserten Winkelgenauigkeit und Winkelauflösung.

Ein weiterer oder anderer Aspekt des erfindungsgemäßen Verfahrens sieht vor, dass die betragsmäßige Differenzen zwischen dem zweiten Sensorsignal und den elektrischen Winkeln mit einem ersten Schwellwert verglichen werden, wobei das erste Sensorsignal und das zweite Sensorsignal neu erfasst werden, wenn alle betragsmäßige Differenzen den ersten Schwellwert überschreiten. Mit anderen Worten gibt der erste Schwellwert ein Maß oder einen Winkelbereich vor, für den die Differenzen zu möglichen Winkelwerten in beide Richtungen zu groß sind. Derartige große Winkelabweichungen erschweren einerseits eine sichere Entscheidung bei der Auswahl des richtigen elektrischen Winkels, und weisen andererseits auf einen möglichen Fehler der Vorrichtung hin.

Wird der erste Schwellwert von allen betragsmäßigen Differenzen überschritten, sodass keine sichere Wahl der elektrischen Lage möglich ist, so werden die Messungen des Gebersystems und des sensorlosen Systems wiederholt und neue erste und zweite Sensorsignale für die Auswertung bereitgestellt. Wird der erste Schwellwert erneut überschritten, so ist in einer denkbaren Weiterbildung des Verfahrens vorgesehen, dass von dem Controller ein Notbetrieb gestartet wird. Unter einem Notbetrieb sind hierbei beispielsweise das Auslösen einer Sicherheitsfunktion und/oder eine Verhinderung des Motorbetriebs zu verstehen.

Während des Betriebs der Vorrichtung werden die Sensorsignale vorzugsweise kontinuierlich erfasst und periodisch ausgewertet. In einer möglichen Ausbildung wird die betragsmäßige Differenz aufeinanderfolgender erster Sensorsignale mit einem zweiten Schwellwert als Maß für eine Umdrehungsgrenze verglichen. Bei einer periodischen Auswertung der ersten Sensorsignale sind unter aufeinanderfolgenden Signalen insbesondere zeitlich benachbarte Messwerte des Gebersystems zu verstehen. Überschreitet die betragsmäßige Differenz aufeinanderfolgender erster Sensorsignale den zweiten Schwellwert, so wird der Wert der Lage korrigiert. Da zum Beispiel ein 10-poliges Gebersystem nach einer 72°-Umdrehung der Motorwelle erneut die gleichen Werte meldet ("Überlauf"), muss der daraus abgeleitete Wert der Lage, insbesondere bei hohen Motordrehzahlen, korrigiert werden. Als zweiter Schwellwert wird vorzugsweise eine geeignete Konstante verwendet, die zweckmäßigerweise in einem Speicher des Controllers hinterlegt ist. Eine mögliche Wahl für die Konstante ist beispielsweise die Kreiszahl $\pi$.

In einer geeigneten Ausführung des Verfahrens wird die Lage während des Anfahrens des Elektromotors bestimmt. Diese Ausführung nutzt die Tatsache, dass die absolute Lage des Zentralelements lediglich einmal definiert bestimmt werden muss. Nachdem der initiale Lagewert erfasst ist, ist es anschließend ausreichend, lediglich das Gebersystem auszuwerten. Mit anderen Worten wird während des Startens des Elektromotors der Wert der absoluten Lage des Zentralelements anhand des erfindungsgemäßen Verfahrens bestimmt, wobei im anschließenden Normalbetrieb des Elektromotors vorzugsweise lediglich das Gebersystem betrieben und anhand des hinterlegten Lagewerts ausgewertet wird. Dadurch entstehen die möglicherweise auftretenden Pfeifgeräusche während des sensorlosen Verfahrens des sensorlosen Systems im Wesentlichen lediglich während der kurzen Zeitspanne des Anfahrens des Elektromotors, wobei im Anschluss hieran lediglich das vergleichsweise geräuscharme Gebersystem betrieben wird. Dadurch wird der Benutzerkomfort des Elektromotors, oder eines damit ausgestatteten Antriebssystems, vorteilhaft und einfach erhöht.

Der Controller ist zweckdienlicherweise Teil einer Motorsteuerung zum Zwecke einer Steuerung und Regelung der Kommutierung sowie der Lage- und Drehzahlregelung des Elektromotors. Der Controller der erfindungsgemäßen Vorrichtung ist hierbei allgemein - programm- und/oder schaltungstechnisch - zur Durchführung des vorstehend beschriebenen Verfahrens eingerichtet. Insbesondere ist der Controller mittels der bestimmten Lage dazu geeignet und eingerichtet, eine Kommutierung des Motorstroms sowie eine Lage- und/oder Drehzahlregelung im Betrieb des Elektromotors zu steuern.

Der Controller ist zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Benutzer - bei Ausführung der Betriebssoftware in dem Mikrocontroller automatisch durchgeführt wird.

Der Controller ist in einer möglichen Ausführungsform im Rahmen der Erfindung alternativ aber auch durch programmierbare elektronische Bauteile, zum Beispiel einen anwendungsspezifischen integrierten Schaltkreis (ASIC) gebildet, in dem die Funktionalität zur Durchführung des erfindungsgemäßen Verfahrens mit schaltungstechnischen Mitteln implementiert ist.

Nachfolgend wird ein Ausführungsbeispiel der Erfindung anhand einer Zeichnung näher erläutert. Es zeigen:

Fig. 1 eine schematische Darstellung eines elektromotorischen Antriebssystems mit einem Synchronmotor und einem Controller, und

Fig. 2 ein Zeigerdiagramm zur Bestimmung einer elektrischen Lage eines Zentralelements des Synchronmotors.

Einander entsprechende Teile und Größen sind in allen Figuren stets mit den gleichen Bezugszeichen versehen.

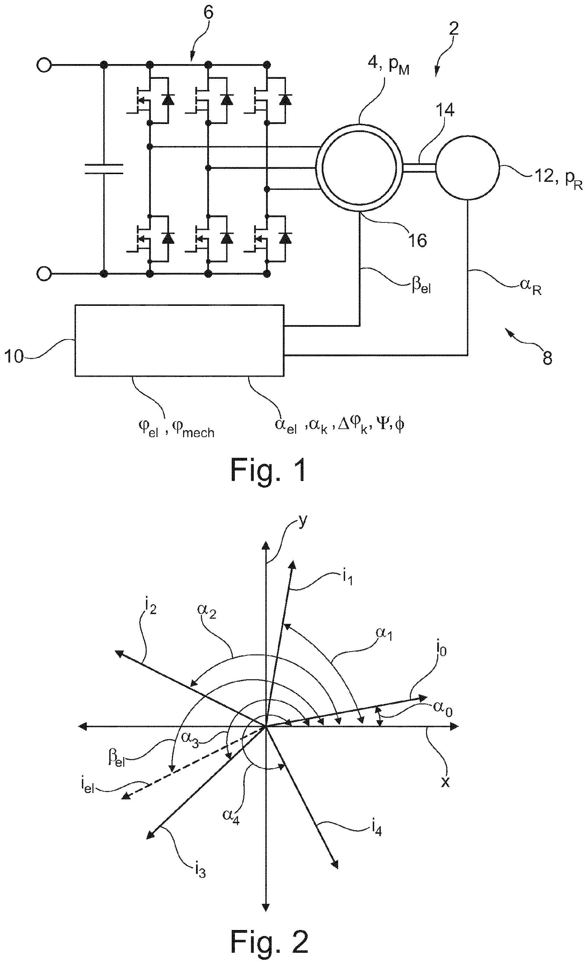

Das in der Fig. 1 dargestellte elektromotorische Antriebssystem 2 umfasst einen Elektromotor 4, der für eine Servofunktionalität geeignet und eingerichtet ist. Der insbesondere als Synchronmotor ausgeführte Elektromotor 4 ist mittels eines Wechselrichters 6 als Teil eines Umrichters an einen Gleichspannungszwischenkreis angeschlossen. Der Wechselrichter 6 konvertiert die Gleichspannung des Zwischenkreises in einen dreiphasigen Drehstrom zum Betrieb des Synchronmotors 4.

Der Synchronmotor 4 ist mit einer Vorrichtung 8 gekoppelt. Die Vorrichtung 8 umfasst einen Controller 10 für eine Regelung, sodass ein gefordertes Drehmoment mit dem Synchronmotor 4 erzeugt wird. Durch eine Kommutierung wird der durch den Wechselrichter 6 bereitgestellte Drehstrom oder Motorstrom geändert. Mit dem Motorstrom wird in einem Stator des Synchronmotors 4 ein magnetisches Drehfeld erzeugt, welches einen im Stator drehbar gelagerten Rotor in Drehung versetzt. Mit anderen Worten ist der Controller 10 der Vorrichtung 8 mit dem Synchronmotor 4 gekoppelt und dazu ausgelegt, den Synchronmotor 4 anzusteuern beziehungsweise dessen Betrieb zu Regeln.

Der Stator weist geeigneterweise eine Drehfeldwicklung auf, welche durch eine Anzahl von miteinander verschalteten Phasenwicklungen gebildet ist. Die Phasenwicklungen sind hierbei als Spulen auf einem Statorblechpaket des Stators gewickelt, wobei die Spulen im Betrieb als magnetische Pole wirken. Mit anderen Worten weist der Stator durch die Drehfeldwicklung eine Anzahl von magnetischen Polen auf, deren Anzahl durch die Polpaarzahl $p_M$ charakterisiert wird.

Im Betrieb ist es wünschenswert, dass das magnetische Drehfeld synchron mit der Drehung des Rotors erfolgt. Für die Regelung beziehungsweise Ansteuerung des Synchronmotors 4 greift der Controller 10 auf den zeitabhängigen Rotorwinkel des Rotors in Bezug auf den Stator zurück.

Der Rotorwinkel ist nachfolgend auch als die Lage des Rotors bezeichnet, wobei hierbei insbesondere zwischen der elektrischen Lage $\varphi_{el}$ und der mechanischen Lage $\varphi_{mech}$ unterschieden wird. Die mechanische Lage $\varphi_{mech}$ bezeichnet insbesondere die absolute mechanische Winkellage des Rotors in Bezug auf den Stator, wobei die elektrische Lage $\varphi_{el}$ insbesondere für die Kommutierung des Motorstroms relevant ist. Die elektrische Lage $\varphi_{el}$ beschreibt hierbei den Winkel eines Stromvektors in Polarkoordinaten, anhand welchem der Motorstrom kommutiert wird. Die elektrische Lage $\varphi_{el}$ und die mechanische Lage $\varphi_{mech}$ sind zueinander proportional, das bedeutet, dass bei einer Kenntnis der mechanischen Lage $\varphi_{mech}$ die elektrische Lage $\varphi_{el}$ vom Controller 10 berechenbar ist und umgekehrt.

Zur Erfassung der mechanischen Lage $\varphi_{mech}$ ist der Synchronmotor 4 mit einem Gebersystem 12 der Vorrichtung 8 ausgestattet. Das Gebersystem 12 ist in diesem Ausführungsbeispiel insbesondere ein Resolver, der zum Zwecke einer Lage- und Drehzahlerfassung mit einem Zentralelement 14, insbesondere einer drehfest mit dem Rotor gekoppelten Antriebs- oder Motorwelle, gekoppelt ist. Der Resolver 12 weist erfindungsgemäß eine Polpaarzahl $p_R$ auf, deren Wert sich von der Polpaarzahl $p_M$ des Synchronmotors 4 unterscheidet. Die Polpaarzahl $p_R$ ist in diesem Ausführungsbeispiel insbesondere größer als die Polpaarzahl $p_M$, das heisst, der Resolver 12 weist eine größere Anzahl an magnetischen Polen auf als der Stator des Synchronmotors 4.

Die elektrischen Signale des Resolvers 12 - Sensorsignale $\alpha_R$ - werden von dem Resolver 12 an den Controller 10 zur Auswertung versendet. Die Sensorsignale $\alpha_R$ sind hierbei charakterisierend für die Drehzahl des Antriebssystems 2, das bedeutet für die Drehzahl der Motorwelle 14.

Die Vorrichtung 8 umfasst weiterhin ein sensorloses System 16, welches mittels eines sensorlosen Verfahrens die Position und insbesondere die elektrische Lage $\varphi_{el}$ der Motorwelle 14 beziehungsweise des Rotors erfasst. Das sensorlose System 16 erzeugt im Betrieb Sensorsignale $\beta_{el}$, die an den Controller 10 gesendet werden, und die bei der Auswertung der Sensorsignale $\alpha_R$ berücksichtigt werden.

Anhand der Fig. 2 ist das Verfahren zur Auswertung der Sensorsignale $\alpha_R$ und $\beta_{el}$ näher erläutert. Das Zeigerdiagramm ist eine Polardarstellung in einem kartesischen Koordinatensystem in einer komplexen Wechselstromebene, mit einer Abszissenachse x und einer Ordinatenachse y, wobei die eingetragenen Winkel von einer Abszissenachse x aus gemessen werden.

Die Winkelauflösung des Resolvers 12 ist im Wesentlichen gegeben durch das Verhältnis des Vollwinkels zur Polpaarzahl $p_R$, das bedeutet zum Beispiel, dass ein 10-poliger Resolver 12 mit einer Polpaarzahl $p_R$ von fünf (5) nach einer Drehung der Motorwelle 14 von 72° die gleichen Werte des Sensorsignals $\alpha_R$ meldet. Mit anderen Worten erzeugt der Resolver 12 ein Maß für die mechanische Lage $\varphi_{mech}$, das bedeutet, es sind mehrere mechanische Winkel $\alpha_{mech}$ (Rotorposition) möglich:

$$\alpha_{mech} = \frac{\alpha_R + 2\pi k}{p_R},$$

Dabei ist der Laufindex k ganzzahlig und läuft im Intervall zwischen 0 bis $p_R$ - 1. Die entsprechenden elektrischen Winkel $\alpha_{el}$ für die Kommutierung können hierbei direkt aus den mechanischen Winkeln $\alpha_{mech}$ und der Polpaarzahl $p_M$ des Synchronmotors 4 berechnet werden:

$$\alpha_{el} = p_M\, \alpha_{mech}.$$

Dies bedeutet, dass ein Maß für den elektrischen Winkel $\alpha_{el}$ generiert wird:

$$\alpha_{el} = \frac{p_M}{p_R}(\alpha_{mech} + 2\pi k).$$

Die Polpaarzahlen $p_M$ und $p_R$ des Synchronmotors 4 und des Resolvers 12 sind hierbei erfindungsgemäß relativ prim zueinander, sodass sich eine der Polpaarzahl $p_R$ entsprechende Anzahl von elektrischen Winkeln $\alpha_{el}$ ergeben.

Das Zeigerdiagramm der Fig. 2 stellt ein Ausführungsbeispiel des Antriebssystems 2 dar, bei welchem der Synchronmotor 4 eine Polpaarzahl $p_M$ von drei (3) aufweist und der Resolver 12 eine Polpaarzahl $p_R$ von 5 besitzt. Dadurch ergeben sich fünf mögliche Werte für den elektrischen Winkel $\alpha_{el}$, die in der Fig. 2 entsprechend dem zugehörigen Laufindex k als $\alpha_k$ durchnummeriert und bezeichnet sind. In der Fig. 2 ist zu jedem Wert des elektrischen Winkels $\alpha_k$ der entsprechende Stromvektor $i_k$ für die Kommutierung mit eingezeichnet.

Um denjenigen elektrischen Winkel $\alpha_k$ auszuwählen, der die korrekte elektrische Lage $\varphi_{el}$ beschreibt, werden die elektrischen Winkel $\alpha_k$ mit dem Sensorsignal $\beta_{el}$ verglichen. Der dem Sensorsignal $\beta_{el}$ zugehörige Stromvektor $i_{el}$ ist in der Fig. 2 gestrichelt dargestellt. Das sensorlose Verfahren des sensorlosen Systems 16 liefert im Wesentlichen einen Schätzwert für die elektrische Lage $\varphi_{el}$, der eine geringere Winkelauflösung und geringere Winkelgenauigkeit aufweist, als die elektrischen Winkel $\alpha_k$ des Resolvers 12. Da jedoch lediglich ein Wert für die elektrische Lage erzeugt wird, ermöglicht das Sensorsignal $\beta_{el}$ durch einen Vergleich mit den Werten der Winkel $\alpha_k$, denjenigen Winkel $\alpha_k$ auszuwählen, der der korrekten elektrischen Lage $\varphi_{el}$ entspricht.

Hierzu werden von dem Controller die betragsmäßigen Differenzen $\Delta\varphi_k$ zwischen dem sensorlos erfassten Winkel $\beta_{el}$ und den elektrischen Winkeln $\alpha_k$ des Resolvers 12 gebildet:

$$\Delta\varphi_k = \left| \beta_{el} - \frac{p_M}{p_R} \left( \alpha_{mech} + 2\pi k \right) \right|.$$

Die elektrische Lage $\varphi_{el}$ ist somit insbesondere diejenige betragsmäßige Differenz $\Delta\varphi_k$, die den geringsten Wert aufweist, also derjenige elektrische Winkel $\alpha_k$, zu welchen der Schätzwert des Sensorsignals $\beta_{el}$ wertemäßig am nächsten liegt.

In dem Beispiel der Fig. 2 liefert der Schätzwert des Sensorsignals $\beta_{el}$ eine elektrische Lage von 200°, der zwischen den elektrischen Winkeln $\alpha_2$ = 153° und $\alpha_3$ = 225° liegt. In diesem Beispiel ergibt sich für die elektrische Lage $\varphi_{el}$ somit der elektrische Winkel $\alpha_3$, da die betragsmäßige Differenz $\Delta\varphi_3$ den geringsten Wert aufweist. Die absolute mechanische Lage $\varphi_{mech}$ ergibt sich entsprechend hieraus zu 75°.

Mit anderen Worten bestimmt das Verfahren den Initialwert des Laufindex k. Dies bedeutet, dass derjenige Kreissektorabschnitt des Resolvers 12 bestimmt wird, entlang welchem der wellenfeste Geber des Resolver 12 bei einem Anfahren des Antriebssystems 2 orientiert ist. Dieser Wert ist zeitlich konstant, so dass es ausreichend ist, ihn während des Anfahrens des Synchronmotors 4 zu bestimmen. Ist dieser Wert bestimmt, so wertet der Controller 10 ab diesem Zeitpunkt lediglich die vom Resolver 12 gelieferten Sensorsignale $\alpha_R$ aus und bestimmt hieraus die mechanische Lage $\varphi_{mech}$ für die Drehzahl- und Lageregelung sowie die elektrische Lage $\varphi_{el}$ für die Kommutierung.

Vorzugsweise werden die betragsmäßigen Differenzen $\Delta\varphi_k$ im Zuge des Auswerteverfahrens mit einem Schwellwert $\psi$ verglichen, der beispielsweise in einem Speicher des Controllers 10 hinterlegt ist. Der Schwellwert $\psi$ ist hierbei ein Maß beziehungsweise ein Winkelbereich, welcher die möglichen Winkelwerte in beide Richtungen begrenzt. Zu große Winkelabweichungen erschweren einerseits eine sichere Entscheidung bei der Auswahl des richtigen elektrischen Winkels $\alpha_k$ und weisen andererseits auf einen möglichen Fehler der Vorrichtung 4 hin.

Bei einem Überschreiten des Schwellwerts $\psi$ werden die Messungen des Resolvers 12 und des sensorlosen Systems 16 wiederholt, und es werden neue Sensorsignale $\alpha_R$ und $\beta_{el}$ für den Controller 10 generiert. Wird der Schwellwert $\psi$ anschließend erneut von allen betragsmäßigen Differenzen $\Delta\varphi_k$ überschritten, so löst der Controller 10 vorzugsweise einen Notbetrieb aus, bei welchem eine Sicherheitsfunktion zum sicheren Halt des Synchronmotors 4 gestartet wird.

Um sicherzustellen, dass die Lage $\varphi_{el}$ beziehungsweise $\varphi_{mech}$ auch bei hohen Drehzahlen der Motorwelle 14 zuverlässig bestimmt wird, werden die Sensorsignale $\alpha_R$ des Resolvers 12 periodisch ausgewertet. Hierbei werden die betragsmäßigen Differenzen zwischen zwei zeitlich benachbarten Sensorsignalen $\alpha_R$ gebildet und mit einem hinterlegten Schwellwert $\phi$ verglichen. Der Controller 10 erkennt hierbei anhand eines Überschreitens des Schwellwerts $\phi$ einen Überlauf des Resolvers 12. Dies bedeutet, dass der Resolver 12 eine Umdrehungsgrenze erreicht hat. In diesem Falle werden die Werte der mechanischen und elektrischen Lage $\varphi_{mech}$ und $\varphi_{el}$ mit einem entsprechenden Winkelwert korrigiert.

Bezugszeichenliste

| | |
|---|---|
| 2 | Antriebssystem |
| 4 | Elektromotor/Synchronmotor |
| 6 | Wechselrichter |
| 8 | Vorrichtung |
| 10 | Controller |
| 12 | Gebersystem/Resolver |
| 14 | Zentralelement/Motorwelle |
| 16 | sensorloses System |
| | |
| k | Laufindex |
| $p_R$, $p_M$ | Polpaarzahl |
| $\varphi_{el}$ | elektrische Lage |
| $\varphi_{mech}$ | mechanische Lage |

$\alpha_R$, $\beta_{el}$ Sensorsignal
$\alpha_{mech}$ mechanischer Winkel
$\alpha_{el}$, $\alpha_k$ elektrischer Winkel
x Abszissenachse
y Ordinatenachse
$\Delta\varphi_k$ betragsmäßige Differenz
$i_k$, $i_{el}$ Stromvektor
$\psi$, $\phi$ Schwellwert

## Patentansprüche

1. Vorrichtung (8) zur Erfassung einer Lage ($\varphi_{mech}$, $\varphi_{el}$) eines rotierenden Zentralelements (14) eines Elektromotors (4), insbesondere eines Synchronmotors, mit einem Controller (10) und mit einem Gebersystem (12) zur Generierung eines ersten Sensorsignals ($\alpha_R$), sowie mit einem sensorlosen System (16) zur Generierung eines zweiten Sensorsignals ($\beta_{el}$),

   - wobei das Gebersystem (12) eine vom Elektromotor (4) unterschiedliche Polpaarzahl ($p_R$) aufweist,
   - wobei der Controller (10) anhand des ersten Sensorsignals ($\alpha_R$) und den Polpaarzahlen ($p_R$, $p_M$) des Gebersystems (12) und des Elektromotors (4) eine Anzahl von elektrischen Winkeln ($\alpha_{el}$, $\alpha_k$) als Maß für die elektrische Lage des Zentralelements ($\varphi_{el}$) bestimmt,
   - wobei der Controller (10) die elektrischen Winkel ($\alpha_{el}$, $\alpha_k$) mit dem zweiten Sensorsignal ($\beta_{el}$) vergleicht und dabei betragsmäßige Differenzen ($\Delta\varphi_k$) zwischen dem zweiten Sensorsignal ($\beta_{el}$) und jedem der elektrischen Winkeln ($\alpha_k$) des ersten Sensorsignals ($\alpha_R$) bestimmt, und
   - wobei der Controller (10) anhand der betragsmäßigen Differenzen ($\Delta\varphi_k$) den elektrischen Winkel ($\alpha_{el}$, $\alpha_k$) als Lage ($\varphi_{mech}$, $\varphi_{el}$) des Zentralelements (14) auswählt, bei dem die betragsmäßige Differenz ($\Delta\varphi_k$) zwischen dem zweiten Sensorsignal ($\beta$el) und dem elektrischen Winkeln ($\alpha_k$) den geringsten Wert aufweist.

2. Vorrichtung (8) nach Anspruch 1, wobei das Gebersystem (12) ein Resolver mit einer Polpaarzahl ($p_R$) ist, die einen größeren Wert aufweist, als die Polpaarzahl ($p_M$) des Elektromotors (4).

3. Vorrichtung (8) nach Anspruch 1 oder 2, wobei die Polpaarzahl ($p_R$) des Gebersystems (12) eine relative Primzahl zu der Polpaarzahl ($p_M$) des Elektromotors (4) ist.

4. Verfahren zur Erfassung einer Lage ($\varphi_{mech}$, $\varphi_{el}$) eines rotierenden Zentralelements (14) eines Elektromotors (4) unter Verwendung einer Vorrichtung (8) mit einem Controller (10) und mit einem Gebersystem (12) zur Generierung eines ersten Sensorsignals ($\alpha_R$), sowie mit einem sensorlosen System (16) zur Generierung eines zweiten Sensorsignals ($\beta_{el}$),

   - bei welchem anhand des ersten Sensorsignals ($\alpha_R$) und den Polpaarzahlen ($p_R$, $p_M$) des Gebersystems (12) und des Elektromotors (4) eine Anzahl von elektrischen Winkeln ($\alpha_{el}$, $\alpha_k$) als Maß für die elektrische Lage des Zentralelements ($\varphi_{el}$) von dem Controller (10) bestimmt wird,
   - bei welchem die elektrischen Winkel ($\alpha_{el}$, $\alpha_k$) mit dem zweiten Sensorsignal ($\beta_{el}$) von dem Controller (10) verglichen werden,
   - bei welchem während des Vergleichs betragsmäßige Differenzen ($\Delta\varphi_k$) zwischen dem zweiten Sensorsignal ($\beta_{el}$) und jedem der elektrischen Winkeln ($\alpha_k$) des ersten Sensorsignals ($\alpha_R$) bestimmt werden, und
   - bei welchem anhand der betragsmäßigen Differenzen ($\Delta\varphi_k$) der elektrischen Winkel ($\alpha_{el}$, $\alpha_k$) als Lage ($\varphi_{mech}$, $\varphi_{el}$) des Zentralelements (14) bestimmt wird, bei dem die betragsmäßige Differenz ($\Delta\varphi_k$) zwischen dem zweiten Sensorsignal ($\beta_{el}$) und dem elektrischen Winkeln ($\alpha_k$) den geringsten Wert aufweist.

5. Verfahren nach Anspruch 4, bei welchem die betragsmäßigen Differenzen ($\Delta\varphi_k$) zwischen dem zweiten Sensorsignal ($\beta_{el}$) und den elektrischen Winkeln ($\alpha_k$) mit einem ersten Schwellwert ($\psi$) verglichen werden, und bei welchem das erste Sensorsignal ($\alpha_R$) und das zweite Sensorsignal ($\beta_{el}$) neu erfasst werden, wenn alle betragsmäßigen Differenzen ($\Delta\varphi_k$) den ersten Schwellwert ($\psi$) überschreiten.

6. Verfahren nach Anspruch 5, bei welchem bei einem erneuten Überschreiten des ersten Schwellwertes ($\psi$) ein Notbetrieb ausgelöst wird.

7. Verfahren nach einem der Ansprüche 4 bis 6, bei welchem die betragsmäßige Differenz aufeinanderfolgender erster Sensorsignale ($\alpha_R$) mit einem zweiten Schwellwert ($\phi$) als Maß für eine Umdrehungsgrenze verglichen wird, und bei welchem der Wert der Lage ($\varphi_{el}$, $\varphi_{mech}$) korrigiert wird, wenn diese Differenz den zweiten Schwellwert ($\phi$) überschreitet.

8. Verfahren nach einem der Ansprüche 4 bis 7, bei welchem die Lage ($\varphi_{el}$, $\varphi_{mech}$) während eines Anfahrens des Elektromotors (4) bestimmt wird.

## Claims

1. Apparatus (8) for detecting a position ($\varphi_{mech}$, $\varphi_{el}$) of a rotating central element (14) of an electric motor (4), in particular a synchronous motor, comprising a controller (10) and comprising an encoder system (12) for generating a first sensor signal ($\alpha_R$) and also comprising a sensor-free system (16) for generating a second sensor signal ($\beta_{el}$),

- wherein the encoder system (12) has a different number of pole pairs ($p_R$) from the electric motor (4),
- wherein the controller (10) determines a number of electrical angles ($\alpha_{el}$, $\alpha_k$) as a measure of the electrical position of the central element ($\varphi_{el}$) on the basis of the first sensor signal ($\alpha_R$) and the numbers of pole pairs ($p_R$, $p_M$) of the encoder system (12) and the electric motor (4),
- wherein the controller (10) compares the electrical angles ($\alpha_{el}$, $\alpha_k$) with the second sensor signal ($\beta_{el}$) and in so doing determines differences ($\Delta\varphi_k$) in magnitude between the second sensor signal ($\beta_{el}$) and each of the electrical angles ($\alpha_k$) of the first sensor signal ($\alpha_R$), and
- wherein the controller (10) selects the electrical angle ($\alpha_{el}$, $\alpha_k$) at which the difference ($\Delta\varphi_k$) in magnitude between the second sensor signal ($\beta_{el}$) and the electrical angles ($\alpha_k$) has the lowest value as the position ($\varphi_{mech}$, $\varphi_{el}$) of the central element (14) on the basis of the differences ($\Delta\varphi_k$) in magnitude.

2. Apparatus (8) according to Claim 1, wherein the encoder system (12) is a resolver with a number of pole pairs ($p_R$) which has a greater value than the number of pole pairs ($p_M$) of the electric motor (4).

3. Apparatus (8) according to Claim 1 or 2, wherein the number of pole pairs ($p_R$) of the encoder system (12) is a relative prime number to the number of pole pairs ($p_M$) of the electric motor (4).

4. Method for detecting a position ($\varphi_{mech}$, $\varphi_{el}$) of a rotating central element (14) of an electric motor (4) using an apparatus (8) comprising a controller (10) and comprising an encoder system (12) for generating a first sensor signal ($\alpha_R$) and also comprising a sensor-free system (16) for generating a second sensor signal ($\beta_{el}$),

- in which a number of electrical angles ($\alpha_{el}$, $\alpha_k$) is determined as a measure of the electrical position of the central element ($\varphi_{el}$) by the controller (10) on the basis of the first sensor signal ($\alpha_R$) and the numbers of pole pairs ($p_R$, $p_M$) of the encoder system (12) and the electric motor (4),
- in which the electrical angles ($\alpha_{el}$, $\alpha_k$) are compared with the second sensor signal ($\beta_{el}$) by the controller (10),
- in which, during the comparison, differences ($\Delta\varphi_k$) in magnitude between the second sensor signal ($\beta_{el}$) and each of the electrical angles ($\alpha_k$) of the first sensor signal ($\alpha_R$) are determined, and
- in which the electrical angle ($\alpha_{el}$, $\alpha_k$) at which the differences ($\Delta\varphi_k$) in magnitude between the second sensor signal ($\beta_{el}$) and the electrical angle ($\alpha_k$) has the lowest value is determined as the position ($\varphi_{mech}$, $\varphi_{el}$) of the central element (14) on the basis of the differences ($\Delta\varphi_k$) in magnitude.

5. Method according to Claim 4, in which the differences ($\Delta\varphi_k$) in magnitude between the second sensor signal ($\beta_{el}$) and the electrical angles ($\alpha_k$) are compared with a first threshold value ($\Psi$), and in which the first sensor signal ($\alpha_R$) and the second sensor signal ($\beta_{el}$) are detected again if all the differences ($\Delta\varphi k$) in magnitude exceed the first threshold value ($\Psi$).

6. Method according to Claim 5, in which emergency operation is initiated when the first threshold value ($\Psi$) is exceeded again.

7. Method according to one of Claims 4 to 6, in which the difference in magnitude of successive first sensor signals ($\alpha_R$) is compared with a second threshold value ($\phi$) as a measure of a rotation limit, and in which the value of the position ($_{\varphi}el$, $\varphi_{mech}$) is connected if this difference exceeds the second threshold value ($\phi$).

8. Method according to one of Claims 4 to 7, in which the position ($\varphi_{el}$, $\varphi_{mech}$) is determined during start up of the electric motor (4).

**Revendications**

1. Dispositif (8) de détection d'une position ($\varphi_{mech}$, $\varphi_{el}$) d'un élément central tournant (14) d'un moteur électrique (4), notamment d'un moteur synchrone, ledit dispositif comprenant un contrôleur (10) et un système transmetteur (12) destiné à générer un premier signal de capteur ($\alpha_R$), ainsi qu'un système sans capteur (16) destiné à générer un deuxième signal de capteur ($\beta_{el}$),

- le système transmetteur (12) comportant un nombre de paires de pôles ($p_R$) différent de celui du moteur électrique (4),
- le contrôleur (10) déterminant un nombre d'angles électriques ($\alpha_{el}$, $\alpha_k$) comme mesure de la position électrique de l'élément central ($\varphi_{el}$) sur la base du premier signal de capteur ($\alpha_R$) et du nombre de paires de pôles ($p_R$, $p_M$) du système transmetteur (12) et du moteur électrique (4),
- le contrôleur (10) comparant les angles élec-

triques ($\alpha_{el}$, $\alpha_k$) au deuxième signal de capteur ($\beta_{el}$) et déterminant ainsi des différences absolues ($\Delta\varphi_k$) entre le deuxième signal de capteur ($\beta_{el}$) et chacun des angles électriques ($\alpha_k$) du premier signal de capteur ($\alpha_R$), et
- sur la base des différences absolues ($\Delta\varphi_k$) le contrôleur (10) sélectionnant comme position ($\varphi_{mech}$, $\varphi$el) de l'élément central (14), l'angle électrique ($\alpha_{el}$, $\alpha_k$) pour lequel la différence absolue ($\Delta\varphi_k$) entre le deuxième signal de capteur ($\beta_{el}$) et l'angle électrique ($\alpha_k$) a la valeur la plus faible.

2. Dispositif (8) selon la revendication 1, le système transmetteur (12) étant un résolveur dont le nombre de paires de pôles ($p_R$) est supérieur au nombre de paires de pôles ($p_M$) du moteur électrique (4).

3. Dispositif (8) selon la revendication 1 ou 2, le nombre de paires de pôles ($p_R$) du système transmetteur (12) étant un nombre premier relatif par rapport au nombre de paires de pôles ($p_M$) du moteur électrique (4).

4. Procédé de détection d'une position ($\varphi_{mech}$, $\varphi_{el}$) d'un élément central tournant (14) d'un moteur électrique (4) à l'aide d'un dispositif (8) comprenant un contrôleur (10) et un système transmetteur (12) destiné à générer un premier signal de capteur ($\alpha_R$), et un système sans capteur (16) destiné à générer un deuxième signal de capteur ($\beta_{el}$), procédé dans lequel

- un nombre d'angles électriques ($\alpha_{el}$, $\alpha_k$) est déterminé comme mesure de la position électrique de l'élément central ($\varphi_{el}$) par le contrôleur (10) sur la base du premier signal de capteur ($\alpha_R$) et du nombre de paires de pôles ($p_R$, $p_M$) du système transmetteur (12) et du moteur électrique (4), ,
- les angles électriques ($\alpha_{el}$, $\alpha_k$) sont comparés au deuxième signal de capteur ($\beta_{el}$) par le contrôleur (10),
- des différences absolues ($\Delta\varphi_k$) entre le deuxième signal de capteur ($\beta_{el}$) et chacun des angles électriques ($\alpha_k$) du premier signal de capteur ($\alpha_R$) sont déterminées lors de la comparaison, et
- sur la base des différences absolues ($\Delta\varphi_k$) l'angle électrique ($\alpha_{el}$, $\alpha_k$), pour lequel la différence absolue ($\Delta\varphi_k$) entre le deuxième signal de capteur ($\beta_{el}$) et l'angle électrique ($\alpha_k$) a la valeur la plus faible, est déterminé comme position ($\varphi_{mech}$, $\varphi_{el}$) de l'élément central (14) .

5. Procédé selon la revendication 4, dans lequel les différences absolues ($\Delta\varphi_k$) entre le deuxième signal de capteur ($\beta_{el}$) et les angles électriques ($\alpha_k$) sont comparées à une première valeur seuil ($\psi$), et dans lequel le premier signal de capteur ($\alpha_R$) et le deuxième signal de capteur ($\beta_{el}$) sont à nouveau détectés lorsque toutes les différences absolues ($\Delta\varphi_k$) dépassent la première valeur seuil ($\psi$).

6. Procédé selon la revendication 5, dans lequel un fonctionnement de secours est déclenché lorsque la première valeur seuil ($\psi$) est à nouveau dépassée.

7. Procédé selon l'une des revendications 4 à 6, dans lequel la différence absolue entre des premiers signaux de capteur successifs ($\alpha_R$) est comparée à une deuxième valeur seuil ($\phi$) comme mesure d'une limite de rotation, et dans lequel la valeur de la position ($\varphi_{el}$, $\varphi_{mech}$) est corrigée si cette différence dépasse la deuxième valeur seuil ($\phi$).

8. Procédé selon l'une des revendications 4 à 7, dans lequel la position ($\varphi_{el}$, $\varphi_{mech}$) est déterminée lors d'un démarrage du moteur électrique (4).

## Fig. 1

## Fig. 2

**IN DER BESCHREIBUNG AUFGEFÜHRTE DOKUMENTE**

**In der Beschreibung aufgeführte Patentdokumente**

- DE 102010003096 A1
- DE 102010042332 A1
- DE 10337564 A1
- JP 2010011543 A
- DE 102014212554 A1
- CN 105162372 A